# EUROPEAN PATENT APPLICATION

(11) **EP 1 637 644 A2**
(43) Date of publication of application: **22.03.2006**
(21) Application number: 05105966.5
(22) Date of filing: 30.06.2005
(51) Int. Cl.: D06F 75/06, D06F 75/12, D06F 75/28

(54) **Supply cord for steam-using electrical appliances**

(30) Priority: 02.07.2004 IT MO20040170
(71) Applicant: Duemme S.p.A., 41100 Modena (IT); Marotrec SAS - di M. Galbarini & C., 20052 Monza MI (IT)
(72) Inventor: Galbarini, Maurizio, 20060, Gessate MI (IT); Mordini, Massimo, 41100, Modena (IT)
(74) Representative: Modiano, Micaela Nadia

(57) **Abstract**

A supply cord (1) for steam-using electrical appliances, comprising means (2) for conducting electric power, means (3) for supplying steam and means (4) for coupling the conducting means (2) and the supply means (3) so as to form a single cord, the coupling means (4) comprising elastic means (5) with shape memory, which are adapted to return the cord (1) to a rest configuration in the absence of external forces.

## Description

The present invention relates to a supply cord for steam-using electrical appliances, particularly steam irons with separate boiler.

Steam-using electrical appliances are known which are provided with a separate boiler for generating and accumulating pressurized steam, which is fed toward implements which use jets of steam to clean spaces or to iron fabrics.

In particular, steam irons with a separate boiler for ironing fabrics are known in which the boiler is provided with a tank which is supplied with water, preferably distilled water, and is associated with heating means such as electric resistors for generating the steam.

The boiler is supplied with electric power by means of a cable which can be inserted in a mains outlets; a cable for the electric power supply of the resistors for heating the ironing plate and a duct for feeding the steam toward the plate, both made of flexible material and having a rectilinear configuration, are instead interposed between the boiler and the iron.

The cable and the duct have such a length as to allow the user of the iron a mobility, in the vicinity of the boiler, that is sufficient to perform all the operations required for ironing, and are therefore rather bulky.

In order to reduce their overall space occupation, the cable and the duct are usually accommodated within a single flexible sheath or are fixed to each other by means of clips, so as to obtain a single cord.

During ironing, however, the cord hangs in the space between the user and the ironing board, and because of its length it hinders the user, who by sliding the iron along the ironing board with a reciprocating motion away and toward the boiler, drags said cord, making it assume untidy configurations, particularly during return towards the boiler.

Therefore, these known cords are not free from drawbacks, including the fact that they limit the freedom of movement of the user and sometimes require the intervention of the user in order to reposition them in such a configuration as to not hinder the ironing or cleaning operations.

Further, the user must check periodically the correct arrangement of the cord, reducing the level of attention with which he/she handles the iron or the steam-using tool supplied by the boiler, with the consequent risk of scalding.

The aim of the present invention is to eliminate the drawbacks noted above of the background art, by providing a supply cord for steam-using electrical appliances that allows to facilitate the movements and operations of the users of steam-using electrical appliances.

Within this aim, an object of the present invention is to ensure the use of such electrical appliances in conditions of absolute safety.

Another object of the present invention is to provide a structure that is simple, relatively easy to provide in practice, safe in use, effective in operation, and has a relatively low cost.

This aim and these and other obj ects that will become better apparent hereinafter are achieved by the present supply cord for steam-using electrical appliances, comprising means for conducting electric power, means for supplying steam and means for coupling said conducting means and said supply means so as to form a single cord, characterized in that said coupling means comprise elastic means with shape memory, which are adapted to return said cord to a rest configuration in the absence of external forces.

Further characteristics and advantages of the present invention will become better apparent from the following detailed description of two preferred but not exclusive embodiments of a supply cord for steam-using electrical appliances, illustrated by way of non-limiting example in the accompanying drawings, wherein:
Figure 1 is a schematic transverse sectional view of a first embodiment of the cord according to the invention;
Figure 2 is a schematic transverse sectional view of a second embodiment of the cord according to the invention.
Figure 3 is a schematic transverse sectional view of a third embodiment of the cord according to the invention.

With reference to the figures, the reference numeral 1 generally designates a supply cord for steam-using electrical appliances, particularly for steam irons and steam cleaning devices with separate boiler.

The cord 1 comprises electric power conducting means 2, steam supply means 3, and means 4 for coupling the conducting means and the supply means so as to form a single cord.

According to the invention, the coupling means 4 comprise elastic means 5 with shape memory, which are suitable to return the cord 1 to a rest configuration in the absence of external forces.

In the rest configuration, the cord 1 preferably assumes a substantially helical shape.

In this manner, the longitudinal space occupation of the cord 1 is reduced significantly with respect to known cords for an equal total length.

Further, the elasticity given by the elastic means 5 to the entire cord 1 prevents the cord, during use, from assuming configurations which are untidy otherwise hinder or endanger the user.

If the cord 1 is applied for example to a steam iron with separate boiler, as a consequence of the movements of the iron produced by the user, the cord 1 tends spontaneously to return to the rest configuration, without requiring any user intervention.

The elastic means 5 are preferably resistant to temperatures on the order of 190 °C.

The elastic means 5 are made for example of elastomeric thermoplastic polyester, such as Hytrel®, polyamide, or the like.

The elastic means 5 comprise a containment sheath 6, inside which the conducting means 2 and the supply means 3 are accommodated.

Conveniently, the coupling means 4 comprise a protective outer cladding 7, constituted by a tape made of fabric or synthetic material (polyester), known as tracing, which is wrapped around the sheath 6 where provided.

The supply means 3 comprise at least one duct 8 made of substantially flexible material, such as for example EPDM (ethylene propylene diene monomer) or the like.

The conducting means 2 comprise at least three substantially wire-like conducting elements 9, on which respective insulating coverings 10 are wrapped.

If the cord 1 is used in steam irons with separate boiler, the conducting elements 9 are four, three for supplying power to the electric resistors that heat the ironing plate and one directed toward the electric valve for releasing the jet of steam.

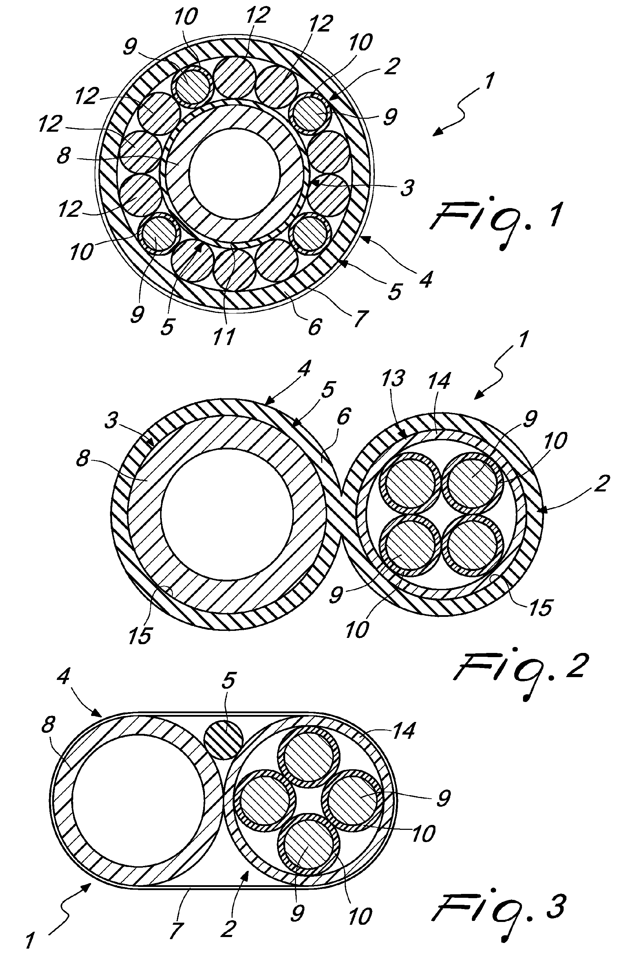

In a first embodiment (Figure 1), the conducting elements 9 are distributed externally with respect to the peripheral region of the duct 8 and the sheath 6 has a substantially circular transverse cross-section.

The elastic means 5 comprise a substantially continuous covering layer 11, which is associated externally with respect to the duct 8 and is interposed between said duct and the conducting elements 9.

The coupling means 4 provide filler inserts 12, which are interposed between the conducting elements 9, which are substantially constituted by cords made of fabric, raffia or the like and are inserted in a number that is sufficient to occupy the transverse cross-section of the sheath 6.

The method for manufacturing a cord 1 of the type described above substantially comprises: an extrusion step to obtain a substantially straight intermediate product, which comprises the sheath 6, which accommodates internally the duct 8, the covering layer 11 associated externally with the duct 8, at least three conducting elements 9 distributed on the peripheral region of the covering layer 11, and the filler inserts 12; a step for cutting a portion of the resulting intermediate product; a step for wrapping the portion onto a substantially cylindrical steel core, so as to assume a substantially helical configuration; a step for keeping the portion wrapped around said core at a temperature between 150 and 190 °C for approximately 60 minutes; a step, which lasts approximately 24 hours, for allowing the portion wrapped around the core to rest at a temperature that is close to the ambient temperature in order to obtain the cord 1.

As an alternative, the elastic means 5 might have just either the sheath 6 or the covering layer 11; if the sheath 6 is not provided, the protective covering 7 is wrapped directly onto the conducting elements 9 and onto the filler inserts 12.

Optionally, the filler elements 12 can be made of elastomeric thermoplastic polyester, such as Hytrel® or polyamide or the like, and thus be part of the elastic means 5.

In a second embodiment (Figure 2), the conducting elements 9 are mutually juxtaposed so as to form an electrical cable 13, optionally provided with an outer insulating layer 14 and arranged proximate to the duct 8.

The transverse cross-section of the sheath 6 is contoured so as to form respective seats 15 for accommodating the electrical cable 13 and the duct 8.

It is possible to provide, externally with respect to the sheath 6, a protective covering 7, which is not shown.

The method for manufacturing a cord 1 of the type described above substantially comprises: an extrusion step for obtaining a substantially rectilinear intermediate product, which comprises the duct 8 and the electrical cable 13, which are mutually juxtaposed and covered by the sheath 6; a step for cutting a portion of the resulting intermediate product; a step for winding the portion onto a substantially cylindrical steel core, so as to assume a substantially helical configuration; a step for keeping the portion wound onto the coil at a temperature between 150 and 190 °C for approximately 60 minutes; a step, which lasts approximately 24 hours, for allowing such portion wrapped around the core to rest at a temperature that is close to the ambient temperature in order to obtain the cord 1.

In a third embodiment of the invention (Figure 3), the elastic means 5 are constituted by a tension member, which is associated along the duct 8 and the electrical cable 13, which like in the preceding embodiment are arranged side by side; the protective covering 7 is wrapped outside the tension member 5, the duct 8 and the electrical cable 13.

The method for manufacturing a cord 1 of the type described above essentially comprises: an extrusion step to obtain a substantially straight intermediate product, which comprises the duct 8, the electrical cable 13 and the tension member 5 wrapped by the protective covering 7; a step for cutting a portion of the resulting intermediate product; a step for wrapping the portion onto a substantially cylindrical steel core, so as to assume a substantially helical configuration; a step for keeping the portion wrapped around said core at a temperature between 150 and 190 °C for approximately 60 minutes; a step, which lasts approximately 24 hours, for allowing the portion wrapped around the core to rest at a temperature that is close to the ambient temperature in order to obtain the cord 1.

During assembly, the cord 1 is processed at its ends according to a conventional method in order to apply traditional-type end elements for connection to the boiler and to the iron or to the steam-using implement.

In practice it has been found that the described invention achieves the proposed aim and objects.

In particular, the cord according to the invention gives considerable practicality in use to electrical appliances to which it is applied and ensures optimum safety conditions for their users.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. M02004A000170 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A supply cord for steam-using electrical appliances, comprising means for conducting electric power, means for supplying steam and means for coupling said conducting means and said supply means so as to form a single cord, **characterized in that** said coupling means comprise elastic means with shape memory, which are adapted to return said cord to a rest configuration in the absence of external forces.

2. The cord according to claim 1, **characterized in that** in said rest configuration it has a substantially helical shape.

3. The cord according to claim 1, **characterized in that** said elastic means with shape memory are resistant to temperatures on the order of 190 ° C.

4. The cord according to claim 1, **characterized in that** said elastic means with shape memory are made of one among elastomeric thermoplastic polyester, polyamide, or the like.

5. The cord according to one or more of the preceding claims, **characterized in that** said elastic means with shape memory comprise a containment sheath which accommodates said supply means and said conducting means.

6. The cord according to one or more of the preceding claims, **characterized in that** said supply means comprise at least one duct made of substantially flexible material.

7. The cord according to one or more of the preceding claims, **characterized in that** said substantially flexible material is of the type of EPDM (ethylene propylene diene monomer) or the like.

8. The cord according to one or more of the preceding claims, **characterized in that** said conducting means comprise at least three substantially wire-like conducting elements.

9. The cord according to one or more of the preceding claims, **characterized in that** said conducting elements are four.

10. The cord according to one or more of the preceding claims, **characterized in that** it comprises an insulating covering which is associated externally with each one of said conducting elements.

11. The cord according to one or more of the preceding claims, **characterized in that** said conducting elements are mutually juxtaposed so as to form an electrical cable.

12. The cord according to one or more of the preceding claims, **characterized in that** said electrical cable and said duct are arranged proximate to each other.

13. The cord according to one or more of the preceding claims, **characterized in that** said sheath has a transverse cross-section which is contoured so as to form respective seats for accommodating said cable and said duct.

14. The cord according to one or more of the preceding claims, **characterized in that** said conducting elements are distributed externally at the peripheral region of said duct.

15. The cord according to one or more of the preceding claims, **characterized in that** said sheath has a substantially circular transverse cross-section.

16. The cord according to one or more of the preceding claims, **characterized in that** said elastic means with shape memory comprise a substantially continuous covering layer associated externally with said duct.

17. The cord according to one or more of the preceding claims, **characterized in that** said covering layer is interposed between said duct and said conducting elements.

18. The cord according to one or more of the preceding claims, **characterized in that** said coupling means comprise filler inserts interposed between said conducting elements.

19. The cord according to one or more of the preceding claims, **characterized in that** said coupling means comprise an external protective covering.

20. The cord according to one or more of the preceding claims, **characterized in that** said elastic means with shape memory comprise at least one tension member associated with said supply means and said conducting means.

21. The cord according to one or more of the preceding claims, **characterized in that** said external protective covering is wrapped around said duct, said electrical cable and said tension member, which are arranged proximate to each other.

22. A method for manufacturing a supply cord for steam-using electrical appliances, comprising the steps of:
- obtaining by extrusion a substantially straight intermediate product, which comprises a duct for the passage of steam made of substantially flexible material and an electrical cable provided with at least three substantially wire-like conducting elements, a tension member made of substantially elastic material with shape memory, and an external protective covering wrapped around the cable, the duct and the tension member, which are arranged proximate to each other;
- cutting a portion of said intermediate product;
- wrapping said portion around a substantially cylindrical core so as to assume a substantially helical shape;
- keeping said portion wrapped around said core at a temperature comprised between 150 and 190 °C for approximately 60 minutes;
- leaving said portion to rest, wrapped around said core, at a temperature close to the ambient temperature in order to obtain a supply cord for steam-using electrical appliances.

23. A method for manufacturing a supply cord for steam-using electrical appliances, comprising the steps of:
- obtaining by extrusion a substantially straight intermediate product, which comprises a duct for the passage of steam made of substantially flexible material and an electrical cable provided with at least three substantially wire-like mutually juxtaposed conducting elements, the cable and the duct being covered with a containment sheath made of substantially elastic material with shape memory;
- cutting a portion of said intermediate product;
- wrapping said portion around a substantially cylindrical core so as to assume a substantially helical shape;
- keeping said portion wrapped around said core at a temperature comprised between 150 and 190 °C for approximately 60 minutes;
- leaving said portion to rest, wrapped around said core, at a temperature close to the ambient temperature in order to obtain a supply cord for steam-using electrical appliances.

24. A method for manufacturing a supply cord for steam-using electrical appliances, comprising the steps of:
- obtaining by extrusion a substantially straight intermediate product, which comprises a containment sheath which accommodates a duct for the passage of steam made of substantially flexible material, a covering layer made of substantially elastic material with shape memory which is associated externally with respect to said duct, at least three conducting elements distributed on the peripheral region of said covering layer, and filler inserts interposed between said conducting elements;
- cutting a portion of said intermediate product;
- wrapping said portion around a substantially cylindrical core so as to assume a substantially helical shape;
- keeping said portion wrapped around said core at a temperature comprised between 150 and 190 °C for approximately 60 minutes;
- leaving said portion to rest, wrapped around said core, at a temperature close to the ambient temperature in order to obtain a supply cord for steam-using electrical appliances.
